# EUROPEAN PATENT APPLICATION

(11) **EP 1 289 207 A2**
(43) Date of publication of application: **05.03.2003**
(21) Application number: 02077961.7
(22) Date of filing: 19.07.2002
(51) Int. Cl.: H04L 12/56

(54) **A method of deriving a route through a network**

(30) Priority: 31.08.2001 GB 0121135
(71) Applicant: Roke Manor Research Limited, Romsey, Hampshire SO51 0ZN (GB)
(72) Inventor: Edwin, Richard, Southampton, SO15 4HU (GB); Reeve, Andrew, Winchester, Hampshire SO22 5AH (GB)
(74) Representative: Payne, Janice Julia

(57) **Abstract**

A method of deriving a route through a network comprises analysing constraints imposed by a stream of data to be routed through the network; calculating a best path through the network between a first node (A) and a second node (G); and setting up, between the first and second nodes, a bearer trail which satisfies the constraints. The method further comprises analysing the chosen route using a state machine to ensure compliance before defining the bearer trail.

## Description

This invention relates to a method of deriving a route through a network, in particular for optical networks.

In an optical network, nodes at an input and an output may not be directly connected. For the purpose of this application, a connection between two nodes in a network which are not directly connected to each other is known as a bearer trail. The bearer trail starts and finishes at multiplexing devices.

A conventional method of routing through a network is known as multi-protocol label switching. The method operates by creating a label switched tunnel through the network, this tunnel or bearer trail is created between the two nodes described above. However, a disadvantage of this system is that a bearer trail is set up in advance of any data transmission and there may not be any traffic which requires the particular connection to be created. This results in additional costs, reduced efficiency and limits the number of users, due to the redundancy in the equipment.

In accordance with the present invention a method of deriving a route through a network comprises analysing constraints imposed by a stream of data to be routed through the network; calculating a best path through the network between a first node and a second node; and setting up, between the first and second nodes, a bearer trail which satisfies the constraints; wherein the method further comprises analysing the chosen route using a state machine to ensure compliance before defining the bearer trail.

The present invention is more efficient and cost effective than prior art methods. A bearer trail is only set up when required in response to a data stream which will use that link, so there is no unnecessary redundancy. A further feature of the present invention is that the state machine enables the route to be tested for all constraints before it is defined. Once defined the link is fixed, so this is another feature which avoids undue redundancy.

Preferably, the method further comprises analysing constraints for subsequent data streams and routing the subsequent data streams via the existing bearer trail if the bearer trail satisfies the new constraints

The link that has been set up in response to one data stream is then preferentially allocated to subsequent data streams for which it satisfies the constraints. This reduces the overhead in setting up new bearer trails.

The invention is applicable to various networks, such as any network containing areas of differing signal type capability or bandwidths, but preferably, the network comprises an automatically switched optical network.

An example of a method of routing a path in a network according to the present invention will now be described with reference to the accompanying drawing in which:-
Figure 1 illustrates possible connections in a network in which the paths are routed by a method according to the invention;
Figure 2 illustrates a path allocated according to the method of the present invention; and,
Figure 3 is a state machine illustrating the connections of Fig. 2.

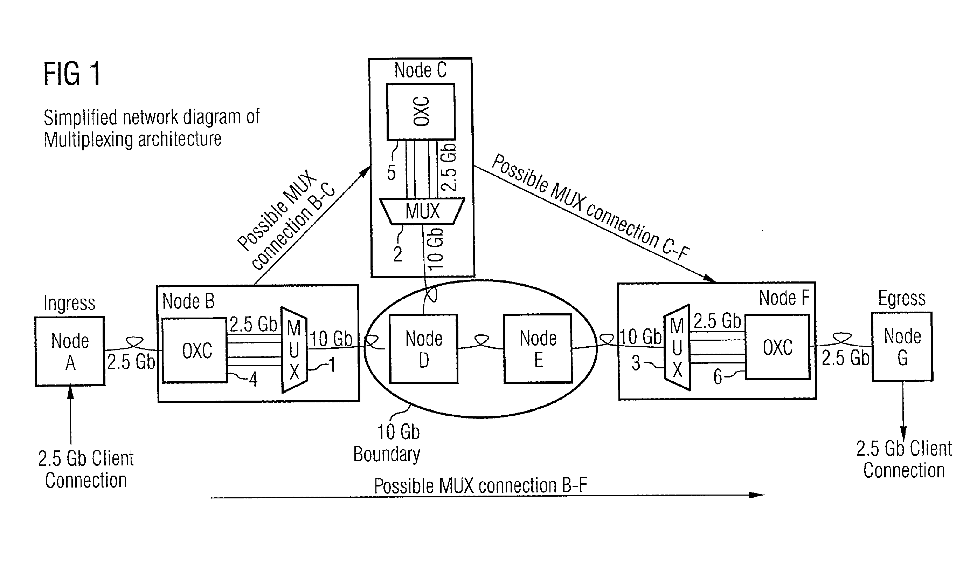

An example network is shown in Fig. 1. The network comprises 7 nodes, A to G. Nodes A and G are ingress and egress devices for connecting to a client via a 2.5Gb connection and nodes B, C and F include multiplexing devices 1, 2, 3 and optical cross-connect (OXC) 4, 5, 6. Both sets of nodes are outside a 10Gb boundary. Nodes D and E are within the 10 Gb boundary and connect to their respective multiplexers via a 10Gb connection.

Before any channels inside an optical multiplexer (MUX) are used there is some flexibility concerning the node in the network that will contain a corresponding demultiplexer. In this example, node B's multiplexer 1 can connect to either node C's multiplexer 2 or node F's multiplexer 3. Node C's multiplexer can connect to either node B's or node F's. This is possible because the cross-connect in node D can switch the 10Gb MUX connection from node B to either node C or node E (and hence node F). The 10Gb boundary indicates that everything inside this boundary is switched at the 10Gb level. There is no de-multiplexing capability to the 2.5 Gb level.

The different MUX connection possibilities are taken into account by a routing algorithm such as constrained shortest path first (CSPF), open shortest path first (OSPF), intermediate system - intermediate system (IS-IS) during a route calculation phase in which the ingress node, node A, is calculating the best path through the network. The present invention is suitable for use with some standard routing algorithms such as OSPF/IS-IS, but CSPF is preferred. Once a MUX connection (bearer trail) has been set-up between two nodes, this flexibility is lost. In this example, if the signalling protocols set up a MUX connection from node B to node F, then there is no longer a possibility of connecting B to C using the MUX.

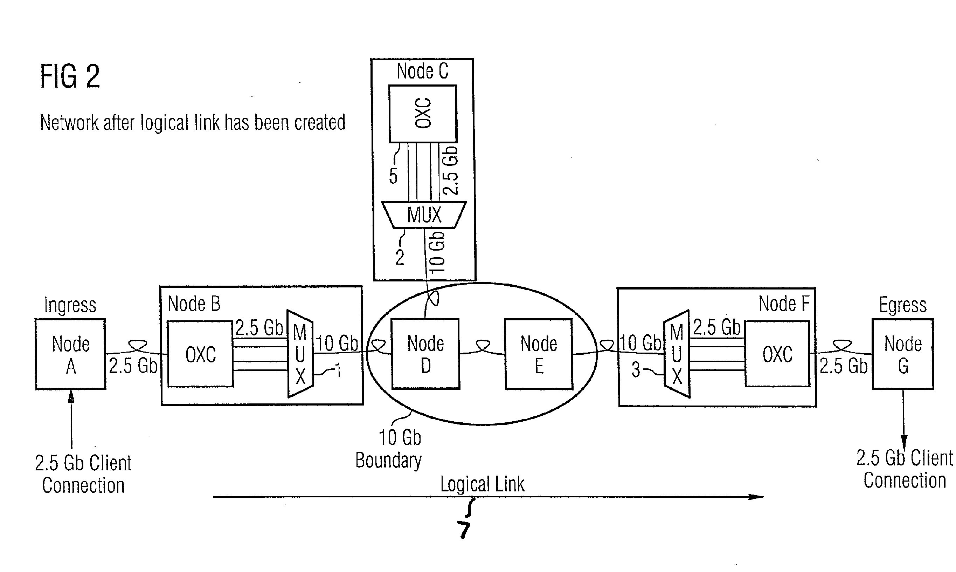

When a bearer trail is set up, a logical link is created to represent this bearer trail through the network. This link is depicted in Fig. 2 and is labelled logical link 7. From then on, when there is a request for a 2.5 Gb connection from A to G, the routing algorithm will see the logical link 7 from node B straight to node F. This link will become the shortest 2.5 Gb path from B to F.

This logical link has the same type of properties as physical links in the network, such as signal type support, bandwidth constraints and shared risk groups. Shared risk groups (SRG) are identifiers for physical risks such as fibres, cables and ducts. A physical link in a network uses a set of these risks. In the case of the logical link, the SRGs for the link are the union of all the SRGs used by the individual hops taken by the logical links.

During the signalling of future paths using the bearer trail, the intermediate nodes (D and E in this example) do not need to be reconfigured. The usage of channels inside the bearer trail is invisible to these nodes. The channel used for a path needs to be co-ordinated between the multiplexing peers. This can be done at the signalling phase. It is not required that all the nodes in the network domain know exactly which channels are used inside a bearer trail.

This provides the concept of pairing multiplexers during path set up to initialise a bearer trail through the network. This model can be extended to support any other type of multiplexing/bearer trail technology.

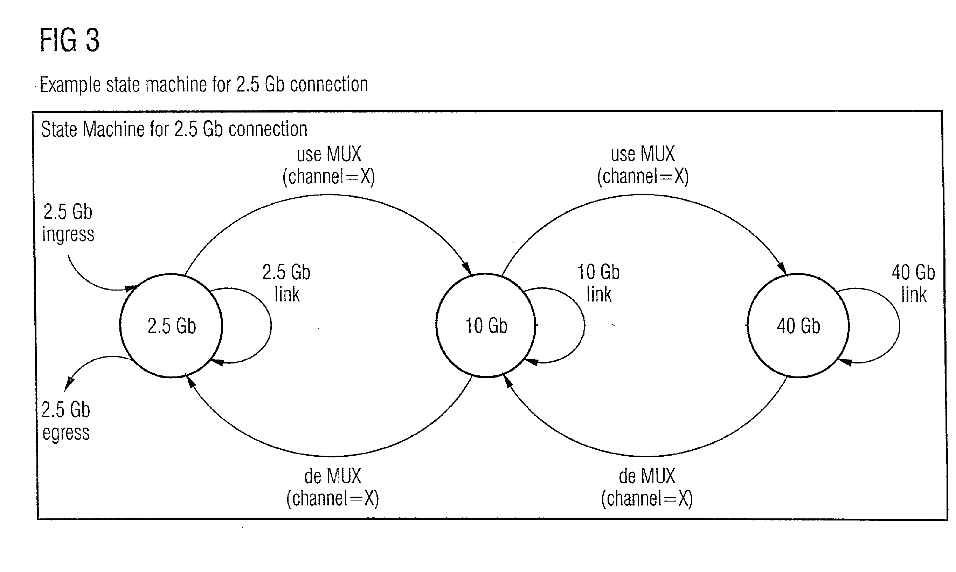

A state machine is used to model the process of going through a multiplexing device in the network. A simple example of the state machine is shown in Fig. 3. In this example a network containing a 40Gb boundary can also be supported. When a constrained routing algorithm is calculating the route through the network, there must be a state change when using a multiplexing device. Before reaching the egress port at the egress node, the signal must be de-multiplexed to the original bandwidth (2.5 Gb in this case).

This state machine can be extended to support changing of signal types through the network as well as multiplexing devices. For example, once a synchronous optical network (SONET) device has been used all other devices must be SONET until a transport signal converter is reached. At this point it is possible to leave one signal boundary (SONET boundary) and enter another (e.g. synchronous data hierarchy - SDH).

The state machine is used during the route calculation phase of path set up. The process of calculating a route through a network involves a manager requesting that a route is set up through a network, and supplying constraints relating to the path to the ingress node such as signal type and bandwidth requirements. The ingress node then calculates a route through the network using a routing algorithm which satisfies the constraints supplied by management. It is at this phase that the state machine is used to make sure that the constraints (e.g. signal type or bandwidth) are fulfilled by each link in the route being calculated. The calculated path is then signalled through the network, and configured by each intermediate hop.

The information distributed by a route distribution protocol (e.g. OSPF/IS-IS) needs to include the multiplexing and de-multiplexing capability of a link. In a link state protocol, such as OSPF, links are uni-directional. So for a bi-directional link, two links are actually advertised. One link from A-B, another link from B-A. In some cases multiplexing and de-multiplexing capabilities advertised in one direction would be mirrored in the link advertised in the opposite direction. This does not have to be the case. It is possible for the capabilities to be different in either direction.

This model is extensible and not constrained to the multiplexing devices used in the example. Any multiplexing equipment can be supported using the signal boundary concept. The state machine can also support any signal constraint, such as bandwidth as described in the example, signal type, or any other constraint that can be applied to a path.

The present invention is applicable to any type of network which contains boundaries, such as signal type support or bandwidth, but is particularly suitable for increasing efficiency of utilisation of automatically switched optical networks.

## Claims

1. A method of deriving a route through a network, the method comprising analysing constraints imposed by a stream of data to be routed through the network; calculating a best path through the network between a first node and a second node; and setting up, between the first and second nodes, a bearer trail which satisfies the constraints, the method further comprising analysing the chosen route using a state machine to ensure compliance before defining the bearer trail.

2. A method according to claim 1, further comprising analysing constraints for subsequent data streams and routing the subsequent data streams via the existing bearer trail if the bearer trail satisfies the new constraints.

3. A method according to claim 1 or claim 2, wherein the network comprises an automatically switched optical network.
